# EUROPÄISCHE PATENTSCHRIFT

(11) **EP 1 412 235 B1**
(45) Veröffentlichungstag und Bekanntmachung des Hinweises auf die Patenterteilung: **03.05.2006**
(21) Anmeldenummer: 02758357.4
(22) Anmeldetag: 18.07.2002
(51) Int. Cl.: B60S 1/38

(54) **WISCHBLATT**
WIPER BLADE
BALAI D'ESSUIE-GLACE

(30) Priorität: 28.07.2001 DE 10136934
(43) Veröffentlichungstag der Anmeldung: 28.04.2004
(73) Patentinhaber: Valeo Systèmes d'Essuyage, 78321 Le Mesnil Saint Denis (FR)
(72) Erfinder: EGNER-WALTER, Bruno, 74076 Heilbronn (DE); SCHÄUBLE, Michael, 74321 Bietigheim-Bissingen (DE); WONDRATSCHEK, Frank, 70376 Stuttgart (DE)
(74) Vertreter: Jahn, Wolf-Diethart
(86) Internationale Anmeldenummer: PCT/EP2002/007980
(87) Internationale Veröffentlichungsnummer: WO 2003/011661

(56) Entgegenhaltungen:
- DE-A- 19 854 372
- DE-A- 19 940 492
- DE-U- 7 407 325
- FR-A- 2 499 486
- US-A- 4 438 543

## Beschreibung

Die Erfindung betrifft ein Wischblatt zum Wischen von Scheiben an Fahrzeugen, mit einem waagebalkenartig aufgebauten Traggestell, das einen mit einem Wischarm verbindbaren Hauptbügel und mit dem Hauptbügel, über wenigstens eine Ebenen von Zwischenbügeln, gekoppelte Endbügel aufweist, und mit einem mit den Endbügeln, insbesondere über an den freien Enden der Endbügel vorhandene Halteabschnitte, gekoppelten Wischleistensystem, wobei eine auf das Traggestell wirkende Anpresskraft, die im Betriebszustand des Wischblatts das Wischleistensystems gegen die Scheibe presst, über Krafteinleitungsstellen von den Endbügeln auf das Wischleistensystem übertragen wird.

Das Traggestell verteilt die von dem Wischarm auf den Hauptbügel wirkende Anpresskraft in der gewünschten Art und Weise auf das Wischleistensystem. Damit soll gewährleistet werden, dass das Wischleistensystem bzw. eine zu dem Wischleistensystem gehörende, flexible Wischleiste während des Wischvorganges an der zu wischenden Scheibe anliegt.

Windschutzscheiben moderner Fahrzeuge sind aerodynamisch ausgebildet. Sie weisen regelmäßig über den Wischwinkel starke Krümmungsänderungen auf, die zum Scheibenrand hin zunehmen. Bei stark gekrümmten Scheiben tritt deshalb häufig der Fall ein, dass das Wischblatt bzw. das Wischleistensystem nicht.über den gesamten Wischwinkel in seiner gesamten Länge an der zu wischenden Scheibe zum Aufliegen kommt. Damit verkleinert sich das gewischte Sichtfeld.

Außerdem kommt es häufig vor, dass die bekannten Wischblätter in der Parkstellung nicht über ihre gesamte Länge zum Aufliegen kommen. Dies hat den Nachteil, dass bei höheren Fahrzeuggeschwindigkeiten Flattergeräusche auftreten können. Auch können dadurch für die Wischqualität nachteilige Ablageverformungen entstehen, wenn das Wischblatt bzw. der Wischarm in seiner Parkstellung nicht entlastet wird.

Um den beschriebenen Nachteilen abzuhelfen, wurden verschiedene Anstrengungen unternommen. So ist es bekannt, die Anpresskraft des Wischblatts zu erhöhen. Dies hat allerdings den Nachteil, dass sich eine zu hohe Anpresskraft auf die Wischqualität negativ auswirken kann. Außerdem führt eine zu hohe Wischblattanpresskraft zu einem erhöhten Verschleiß des Wischleistensystems unter den Krafteinleitungsstellen.

Um das Anpassungsvermögen des Wischblatts an eine im Randbereich stark gekrümmte Scheibe zu erhöhen, ist beispielsweise aus der DE-AS 1 074 429 bekannt geworden, Wischleistensysteme mit Federschienen vorzusehen, die im Endbereich Schwächungen, insbesondere in Form von Lochungen, Prägungen, Ausstanzungen od.dgl., aufweisen. Die zusätzliche Bearbeitung der Federschiene hat sich allerdings als unwirtschaftlich und unbefriedigend erwiesen. Insbesondere in dem zu wischenden Scheibenbereich, in dem eine geringfügige oder keine Krümmung vorliegt, ist im Bereich des geschwächten Abschnitts des Wischleistensystems das Wischergebnis unbefriedigend.

DE-U-7407325 zeigt den Oberbegriff der Anspruchs 1.

Der vorliegenden Erfindung liegt deshalb die Aufgabe zugrunde, ein Wischblatt vorzuschlagen, das den vorstehend beschriebenen Nachteilen des Standes der Technik abhilft. Insbesondere sollen Windschutzscheiben mit starken Krümmungsänderungen über den Wischwinkel mit gutem Wischergebnis gewischt werden können.

Diese Aufgabe wird bei einem eingangs beschriebenen Wischblatt erfindungsgemäß dadurch gelöst, dass der Abstand zwischen zwei benachbarten Krafteinleitungsstellen kleiner als 40 mm ist und dass das Traggestell zwischen dem Hauptbügel und den Endbügeln wenigstens zwei Ebenen von Zwischenbügeln aufweist. Hierbei hat sich gezeigt, dass bei relativ kleinen Abständen zwischen zwei benachbarten Krafteinleitungsstellen die Anpresskraft des Wischleistensystems auf die zu wischende Scheibe besser verteilbar ist. Insbesondere in den Endbereichen des Wischblatts kann hierdurch erreicht werden, dass eine ausreichende Anpresskraft zur Verfügung steht.

Als besonders vorteilhaft hat sich herausgestellt, wenn der Abstand kleiner als 35 mm und insbesondere kleiner als 30 mm ist.

Vorteilhafte Ausführungsformen der Erfindung ergeben sich dann, wenn der Abstand zwischen zwei benachbarten Krafteinleitungsstellen des gleichen Endbügels kleiner als 40 mm oder kleiner als 35 mm oder kleiner als 30 mm ist.

Ebenso kann erfindungsgemäß vorgesehen sein, dass der Abstand zwischen zwei benachbarten Krafteinleitungsstellen zweier verschiedener Endbügel kleiner als 40 mm oder kleiner als 35 mm oder kleiner als 30 mm ist.

Ferner ist erfindungsgemäß denkbar, dass der Abstand sämtlicher benachbarter Krafteinleitungsstellen kleiner als 40 mm oder kleiner als 35 mm oder oder kleiner als 30 mm ist. Auch dies führt zu einem besonders vorteilhaften Wischblatt.

In der Regel weist ein bekanntes Wischblatt zwischen 4 und maximal 10 Krafteinleitungsstellen in das Wischleistensystem auf. Aufgrund des geringeren Abstandes zwischen zwei benachbarten Krafteinleitungsstellen weist ein erfindungsgemäßes Wischblatt in der Regel zwischen 8 und 20 Krafteinleitungsstellen auf. Die erfindungsgemäßen Wischblätter sind vorzugsweise länger als 300 mm, und insbesondere länger als-350 mm.

Die Krafteinleitungsstellen liegen vorzugsweise jeweils im Bereich von den Halteabschnitten, wobei insbesondere im Bereich jedes Halteabschnitts eine Krafteinleitungsstelle liegt. Die Halteabschnitte sind dabei vorteilhafterweise als das Wischleistensystem wenigstens abschnittsweise umgreifende Krallen ausgebildet.

Die Krafteinleitungsstellen können während des Wischvorganges aufgrund von sich ändernden Scheibenkrümmungen ihre Lage im Bereich der Halteabschnitte geringfügig ändern. Maßgeblich ist, dass die angegebenen Abstände der jeweiligen Krafteinleitungsstellen zueinander wenigstens in einer Wischposition erreicht werden, oder wenn das Wischblatt mit dem Wischleistensystem gegen eine ebene Fläche gedrückt wird.

Hierbei kann erfindungsgemäß vorgesehen sein, dass ein freies Ende wenigstens eines dem Wischleistensystem naheliegenden Zwischenbügels als Halteabschnitt zur unmittelbaren Aufnahme des Wischleistensystems und als Krafteinleitungsstelle ausgebildet ist. Sind die Halteabschnitte in Form von Krallen ausgeführt, so werden derartige Zwischenbügel in der Regel als Krallenzwischenbügel bezeichnet.

Bei einer besonders bevorzugten Ausführungsform der Erfindung ist vorgesehen, dass das Wischleistensystem eine flexible Wischleiste bzw. einen Wischgummi oder eine flexible Wischleiste bzw. einen Wischgummi und Mittel zum Verteilen der Anpresskraft über die Länge der Wischleiste bzw. des Wischgummis umfasst. Ist eine große Anzahl vo Krafteinleitungsstellen vorhanden, das heist der ist der Abstand zwischen den Krafteinleitungsstellen sehr klein, kann auf Mittel zum Verteilen der Anpresskraft auch ganz verzichtet werden. Diese kann auch dadurch ermöglicht werden, dass die Wischleiste bzw. der Wischgummi relativ steif ist. Als Mittel zum Verteilen der Anpresskraft des Wischgummis kommen beispielsweise in Frage: eingelegte oder eingeformte Einlagen, insbesondere Metalleinlagen oder Kunststoffeinlagen, Stränge, Fasern, insbesondere Glasfasern od.dgl.. Ebenfalls möglich ist, dass die Anpresskraftverteilungsmittel die Wischleiste bzw. den Wischgummi, insbesondere den Wischleisten - bzw. Wischgummirücken, aufnehmende federelastische Trageprofile aus Metall oder Kunststoff sind, die an dem Traggestell gehaltert und geführt sind.

Die eingangs genannte Aufgabe wird ferner durch ein Wischblatt gelöst, das sich dadurch kennzeichnet, dass bei einem einseitig eingespannten Teilbereich des Wischleistensystems, der in einem Abstand von 65 mm zu der Einspannstelle mit einer Kraft von 0,5 N beaufschlagt wird, eine Durchbiegung f des Teilbereichs in einem Abstand von 70 mm zu der Einspannstelle f = 6 mm oder mehr beträgt. Vorteilhafte Wischblätter ergeben sich insbesondere dann, wenn die Durchbiegung f = 8 mm oder f = 10 mm oder mehr beträgt. Ein Wischleistensystem, bei dem die Durchbiegung f = 6 mm oder f = 8 mm oder f = 10 mm oder mehr beträgt führt insbesondere in Verbindung mit einem Traggestell, das eine Vielzahl von Krafteinleitungsstellen im Abstand von weniger als 40 mm oder 35 mm oder 30 mm aufweist, zu besonders vorteilhaften Wischergebnissen. Insbesondere im Endbereich des Wischblatts kann dadurch gewährleistet werden, dass das Wischleistensystem über den gesamten Wischwinkel an der zu wischenden Scheibe anliegt.

Vorteilhafterweise stammt der Teilbereich, der mit der entsprechenden Kraft beaufschlagt wird und dessen Durchbiegung gemessen wird, aus dem freien Endbereich des Wischleistensystems.

Ein besonders vorteilhaftes Wischblatt ergibt sich dann, wenn die Durchbiegung f zwischen 6 mm und 8 mm beträgt und wenn bei einem maximalen Abstand 1, in mm, der beiden äußersten Krafteinleitungsstellen des Wischblatts wenigstens eine Anzahl z = 0,02/mm * 1 von Krafteinleitungsstellen vorgesehen ist. Bei einer Durchbiegung f zwischen 8 mm und 10 mm ergibt sich ein besonders vorteilhaftes Wischblatt, wenn bei einem maximalen Abstand 1 der beiden äußersten Krafteinleitungsstellen des Wischblatts wenigstens eine Anzahl z = 0,0225/mm * 1 von Krafteinleitungsstellen vorgesehen ist. Beträgt die Durchbiegung f mehr als 10 mm, berechnet sich die Anzahl z von Krafteinleitungsstellen mit: z ≥ 0,025/mm * 1 .

Die beschriebenen Formeln geben einen Zusammenhang an zwischen der Durchbiegung f bzw. der damit einhergehenden Elastizität des Wischleistensystems und der vorzusehenden Anzahl von Krafteinleitungsstellen.

Bei einer besonders vorteilhaften Ausführungsform der Erfindung sind die Mittel zum Verteilen der Anpresskraft über die Länge des Wischgummis in Form von wenigstens einer Federschiene ausgebildet. Erfindungsgemäß ist ebenfalls denkbar, anstelle einer Federschiene zwei oder mehr Federschienen vorzusehen.

Es hat sich als vorteilhaft erwiesen, aufgrund der höheren Anzahl der Krafteinleitungsstellen die Elastizität des Wischleistensystems zu erhöhen. Bei einer Ausführungsform, die als Mittel zum Verstärken der Wischleiste Federschienen aus Stahl umfasst, hat sich als besonders vorteilhaft herausgestellt, wenn die Dicke der Federschiene kleiner oder gleich 0,5 mm ist. Bei einer relativ großen Anzahl von Krafteinleitungsstellen kann der entsprechende Wert kleiner als 0,4 mm oder auch kleiner als 0,3 mm sein. Ist mehr als eine Federschiene vorgesehen, und liegen die Federschienen nicht in einer Ebene, so hat die Summe der Dicken der Federschienen kleiner oder gleich 0,5 mm, kleiner oder gleich 0,4 mm oder kleiner oder gleich 0,3 mm zu sein. Dies ist darin begründet, dass bei der Berechung des Flächenträgheitsmoments die Höhe bzw. Dicke der Federschienen mit der Potenz drei eingeht. Die Breite der Federschienen findet lediglich mit der Potenz eins Berücksichtung und ist daher nicht so entscheidend.

Ein vorteilhaftes Wischblatt weist eine Federschiene aus Stahl mit einer Breite auf, die kleiner oder gleich 5 mm ist. Finden mehrere, in einer Ebene liegende Federschienen Verwendung, so ist vorzugsweise die Summe der Breiten der Federschienen kleiner oder gleich 5 mm.

Besonders vorteilhaft und in der Fertigung kostengünstig ist ein Wischleistensystem, das in Wischblattlängsrichtung einen gleichförmigen oder weitgehend gleichförmigen Querschnitt aufweist. Dies hat ferner den Vorteil, dass eine Bearbeitung von Teilbereichen des Wischleistensystems ent-fällt. Das Wischleistensystem kann bzw. die einzelnen Komponenten des Systems können dann beispielsweise im Ein- oder Mehrkomponenten-Extrudierverfahren hergestellt werden.

Ein weiteres erfindungsgemäßes Wischblatt zeichnet sich dadurch aus, dass das Produkt des Abstandes a, in mm, von zwei benachbarten Krafteinleitungsstellen und der Dicke d, in mm, der Federschiene aus Stahl - bei mehreren senkrecht zur Windschutzscheibe übereinander angeordneten Federschienen die Summe der Dicken der Federschienen - kleiner oder gleich 30 mm² ist. Vorteilhafte Ausführungsformen ergeben sich auch bei Werten kleiner oder gleich 25 mm², kleiner oder gleich 16 mm² oder kleiner oder gleich 9 mm².

Weitere vorteilhafte Ausgestaltungen und Einzelheiten der Erfindung sind der folgenden Beschreibung zu entnehmen, in der die Erfindung anhand der in der Zeichnung dargestellten Ausführungsbeispiele näher beschrieben und erläutert ist.

Es zeigen:
- Fig. 1:: eine Windschutzscheibe mit einer Wischvorrichtung gemäß dem bekannten Stand der Technik;
- Fig. 2:: ein Wischblatt aus Fig. 1 gemäß dem bekannten Stand der Technik;
- Fig. 3:: ein erfindungsgemäßes Wischblatt;
- Fig. 4 und 5:: zwei verschiedene Ansichten, die einen Ausschnitt des Wischblatts gemäß Fig. 3 in vergrößerter Ansicht zeigen;
- Fig. 6:: einen Schnitt entlang der Linie VI in Fig. 3;
- Fig. 7:: ein erfindungsgemäßes Wischblatt in Seitenansicht;
- Fig. 8:: eine Anordnung zur Bestimmung der Durchbiegung eines erfindungsgemäßen Wischleistensystems; und
- Fig. 9:: ein Diagramm, das den Zusammenhang zwischen Wischblattlänge, Durchbiegung und Anzahl der Krafteinleitungsstellen veranschaulicht.

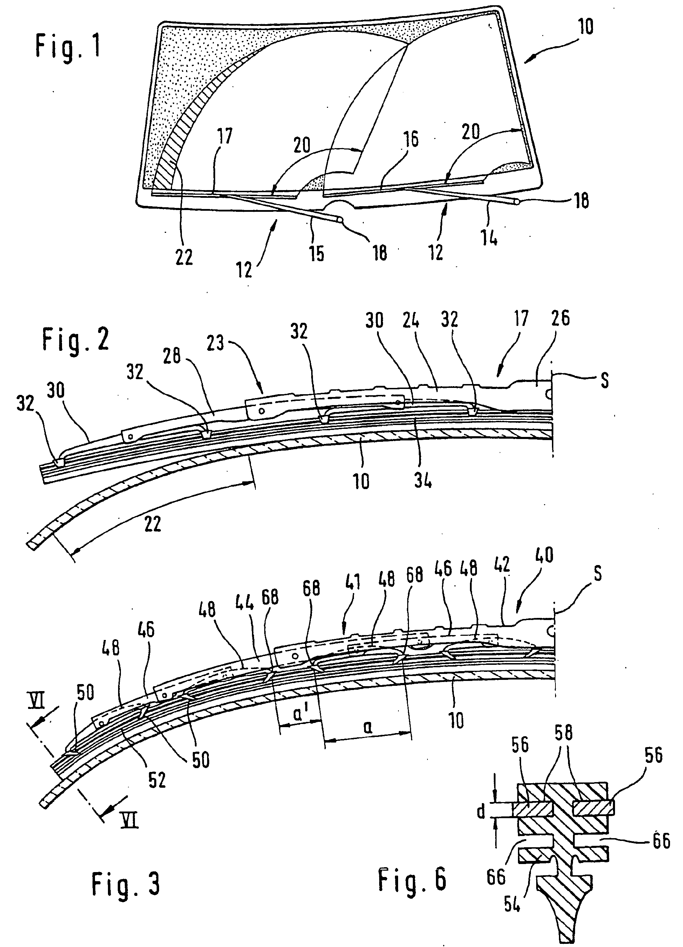

In der Fig. 1 ist eine Windschutzscheibe 10 eines Fahrzeuges sowie eine Wischvorrichtung dargestellt. Die Wischvorrichtung umfasst zwei Wischhebel 12, die jeweils einen Wischarm 14 und 15 und ein Wischblatt 16 und 17 aufweisen. Die Wischhebel 12 sind jeweils um Achsen 18 antreibbar, so dass die Windschutzscheibe 10 über die Wischwinkel 20 von den Wischblättern 16 und 17 gewischt werden kann.

Bei im Randbereich stark gekrümmten Windschutzscheiben 10 tritt bei bekannten Wischblättern 17 regelmäßig der Fall auf, dass das freie Ende des auf der Beifahrerseite angeordneten Wischblatts nicht über den gesamten Wischwinkel 20 an der zu wischenden Scheibe 10 anliegt. Dies führt dazu, dass der mit dem Bezugszeichen 22 gekennzeichnete Bereich von dem Wischblatt 17 nicht erfasst wird. Das tatsächlich gewischte Wischfeld verringert sich demzufolge um den Bereich 22.

In der Fig. 2 ist das entlang der Linie s spiegelsymmetrisch ausgebildete beifahrerseitige Wischblatt 17 in einer Ansicht senkrecht zur Windschutzscheibe 10 dargestellt..Das Wischblatt 17 weist ein waagebalkenartiges Traggestell 23 auf, das in einer ersten Bügelebene einen Hauptbügel 24 mit einem Verbindungsabschnitt 26 zur Anbindung des in Fig. 2 nicht dargestellten Wischarms 15 vorsieht. An den freien Enden des Hauptbügels 24 sind jeweils zwei Zwischenbügel 28 einer zweiten Bügelebene verschwenkbar angeordnet. An den freien Enden der Zwischenbügel 28 sind wiederum bedingt verschwenkbar Endbügel 30 angeordnet. Die Endbügel 30 weisen an ihren freien Enden Halteabschnitte in Form von Krallen 32 auf, die ein Wischleistensystem 34 haltern.

Aus der Fig. 2 geht deutlich hervor, dass das freie Ende des Wischblatts 17 im Bereich 22 nicht an dem relativ stark gekrümmten Randbereich der Windschutzscheibe 10 anliegt.

In der Fig. 3 ist ein erfindungsgemäßes Wischblatt 40 dargestellt. Die in der Fig. 3 gezeigte Ansicht entspricht der Ansicht gemäß Fig. 2. Das Wischblatt 40 weist entsprechend dem in Fig. 2 dargestellten Wischblatt 17 ein Traggestell 41 mit einem in einer ersten Bügelebene liegenden Hauptbügel 42 sowie zwei mit dem Hauptbügel 42 gekoppelte, in einer zweiten Bügelebene liegende Zwischenbügel 44 auf. Die beiden Zwischenbügel 44 sind mit in einer weiteren, dritten Bügelebene liegenden Zwischenbügeln 46 verschwenkbar verbunden. An den freien Enden der Zwischenbügel 46 sind Endbügel 48 mit Halteabschnitten in Form von Krallen 50 angeordnet.

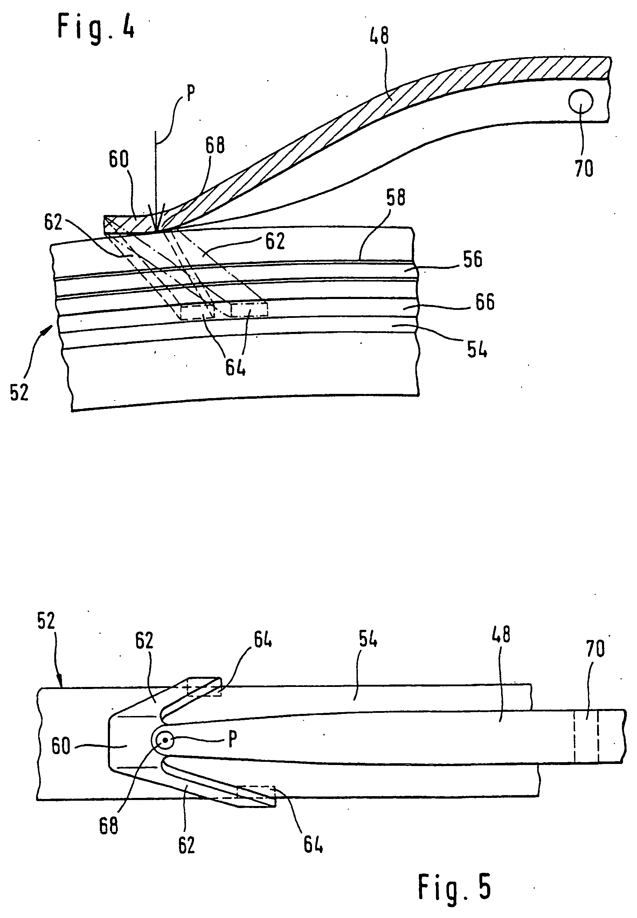

Die Krallen 50 umgreifen abschnittsweise ein Wischleistensystem 52, wie aus dem in Figur 4 und 5 dargestellten Ausschnitt hervorgeht. Das Wischleistensystem 52 wird von einem Wischgummi 54 und zwei parallel, in einer Ebene liegenden, bandartigen Federschienen 56 aus Stahl gebildet, die in je einer Aufnahmenut 58 des Wischgummis liegen.

Die in den Figuren 4 und 5 dargestellte, an einem freien Ende eines Endbügels 48 angeordnete Kralle 50 weist einen Krallenrücken 60 auf, an dem zwei sich in Richtung der Scheibe erstreckende Seitenabschnitte 62 angeordnet sind, die an ihren freien Enden einander zugewandte Eingriffsabschnitte 64 aufweisen. Die Eingriffsabschnitte 64 greifen in einander gegenüberliegende Nuten 66 des Wischgummis 54, die parallel zu den Aufnahmenuten 58 verlaufen. Der dargestellte Endbügel 48 weist in seinem mittigen Bereich einen Verbindungsabschnitt 70 zur gelenkigen Anbindung an einen Zwischenbügel 46 auf.

Im Betriebszustand des Wischblatts 40 beaufschlagt die dem Wischgummi 54 zugewandte Seite des Krallenrückens 60 das Wischgummi 54 in einer Krafteinleitungsstelle 68 mit einer Kraft P gegen die zu wischende Scheibe 10. Die im Bereich des Krallenrückens 60 liegende Krafteinleitungsstelle 68 ist in den Figuren beispielhaft punktförmig dargestellt.

Bei der in den Figuren dargestellten erfindungsgemäßen Ausführungsform liegt je eine Krafteinleitungsstelle 68 im Bereich einer Kralle 50 bzw. im Bereich eines Krallenrückens 60. Die Krafteinleitungsstellen 68 können punktförmig - wie in Figur 4 und 5 dargestellt - linienförmig oder auch flächig ausgebildet sein. Während des Betriebes des Wischblatts 40 kann zudem nicht ausgeschlossen werden, dass die Krafteinleitungsstellen 68 geringfügig im Bereich des jeweiligen Krallenrückens 60 wandern.

Erfindungsgemäß kann vorgesehen sein, dass neben der dritten Bügelebene von Zwischenbügeln 46 weitere Bügelebenen vorgesehen werden können. Außerdem können die Zwischenbügel 46 der dritten und/oder weiterer Bügelebenen als Zwischenkrallenbügel ausgebildet sein, die einerends eine Kralle zur unmittelbaren Aufnahme des Wischleistensystems aufweisen und andererends eine gelenkige Verbindung zu einem weiteren Bügel, insbesondere einem Endbügel, aufweisen.

Im Gegensatz zu dem in Fig. 2 bekannten Wischblatt 17 weist das erfindungsgemäße Wischblatt 40 einen Abstand a bzw. a' zwischen zwei Krafteinleitungsstellen 68 bzw. zwischen zwei Krallen 50 auf, der kleiner als 40 mm ist. Bei dem Abstand a handelt es sich um den Abstand zwischen zwei Krafteinleitungsstellen 68 eines gleichen Endbügels 48. Bei dem Abstand a' handelt es sich um den Abstand zwischen zwei benachbarten Krafteinleitungsstellen 68 zweier verschiedener Endbügel 48.

Bei der in Fig. 3 dargestellten Ausführungsform der Erfindung ist der Abstand a' kleiner als der Abstand a. Der Abstand a beträgt vorteilhafterweise zwischen 35 mm und 40 mm. Der Abstand a' beträgt vorzugsweise weniger als 35 mm, und insbesondere weniger als 30 mm.

Erfindungsgemäß ist allerdings ebenso denkbar, dass der Abstand a ebenfalls weniger als 35 mm, insbesondere auch weniger als 30 mm, betragen kann. Die Abstände a' und a können erfindungsgemäß auch zwischen allen benachbarten Krafteinleitungsstellen 68 gleich groß sein.

Im Gegensatz zu dem in Fig. 2 gezeigten, bekannten Wischblatt 17 hat das erfindungsgemäße Wischblatt 40 gemäß Fig. 3 den Vorteil, dass es über seine gesamte Länge an der zu wischenden Scheibe 10 zum Aufliegen kommt. Bei einem erfindungsgemäßen Wischblatt 40 tritt kein Bereich 22 auf, in welchem das Wischblatt 40 über den Wischwinkel 20 an der zu wischenden Scheibe 10 nicht anliegt.

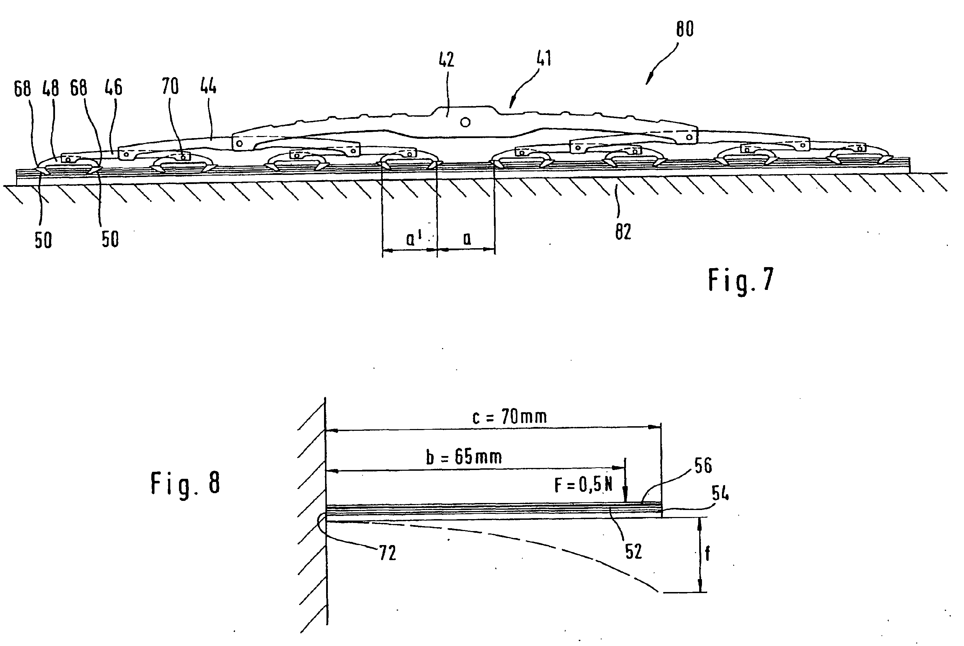

Die Fig. 6 zeigt einen Schnitt durch das Wischleistensystem 52. Deutlich zu erkennen sind die Federschienen 56, die in den Aufnahmenuten 58 an das Wischgummi 54 anliegen. Erfindungsgemäß ist ebenfalls denkbar, dass anstelle von Federschienen 56 beliebige Mittel zum Verstärken der Wischleiste vorgesehen sein können. Derartige Mittel können beispielsweise Einlagen, Stränge, weitere Kunststoffkomponenten, Fasern, insbesondere Glasfasern od.dgl., sein.

Um ein gutes Anliegen an der zu wischenden Scheibe 10 zu gewährleisten, kann erfindungsgemäß vorgesehen sein, dass die der Dicke d der in einer Ebene liegenden Federschienen 56 kleiner als 0,5 mm ist. Je nach Abstand a' bzw. a der einzelnen Krafteinleitungsstellen zueinander und nach Anzahl der Krallen 50 bzw. der Krafteinleitungsstellen 68 kann die Dicke d der Federschienen 56 kleiner als 0,4 mm bzw. kleiner als 0,3 mm sein. Liegen die Federschienen nicht in einer Ebene, so hat die Summen der Dicken der beiden Federschienen weniger als 0,5 mm, oder weniger als 0,4 mm bzw. weniger als 0,3 mm zu betragen.

Die Federschienen 56 weisen jeweils eine Breite von etwas weniger als 2,5 mm auf; die Summe der Breiten der Federschienen ist demnach kleiner als 5 mm.

Das Wischleistensystem 52 weist in Wischblattlängsrichtung einen weitgehend gleichförmigen Querschnitt auf.

Ein besonders vorteilhaftes Wischblatt ergibt sich dann, wenn das Produkt des Abstandes a bzw. a', gemessen in mm, und der Dicke d einer Federschiene 56, ebenfalls gemessen in mm, kleiner oder gleich 30 mm² ist. Vorteilhafterweise ist das Produkt kleiner oder gleich 25 mm².

Die Fig. 7 zeigt ein erfindungsgemäßes Wischblatt 80 in Seitenansicht. Deutlich zu erkennen ist, dass das Wischblatt 80 mit 8 Endbügeln 48 ausgestattet ist und somit insgesamt 16 Halteabschnitte in Form von Krallen 50 aufweist. Daraus ergeben sich 16 Krafteinleitungsstellen 68. Die Abstände a bzw. a', die beim Wischblatt 80 gleich groß sind, sind bei der dargestellten, gegen eine ebene Fläche 82 gedrückten Lage des Wischblatts 80 kleiner als 40 mm und insbesondere kleiner als 35 mm.

Die Fig. 8 zeigt einen schematisch dargestellten Versuchsaufbau, nach welchem sich eine geeignete Elastizität eines Wischleistensystems 52 eines erfindungsgemäßen Wischblatts 40, 80 ermitteln lässt. Gezeigt ist ein Teilbereich des Wischleistensystems 52 mit der Länge c = 70 mm. Das eine Ende des Teilbereichs ist an einer Einspannstelle 72 fest eingespannt. Im Abstand von b = 65 mm zu der Einspannstelle 72 wird das Wischleistensystem 52 mit einer Kraft F = 0,5 N beaufschlagt. Bei erfindungsgemäßen Wischblättern beträgt an dem freien Ende des eingespannten Teilbereichs des Wischleistensystems 52 die Durchbiegung f = 6 mm oder mehr. Vorteilhafterweise stammt der Teilbereich des Wischleistensystems 52 aus dem freien Endbereich des Wischleistensystems 52.

Je nach Anzahl der vorhandenen auf das Wischleistensystem 52 wirkenden Krafteinleitungsstellen 68 kann die Durchbiegung f insbesondere 8 mm, 10 mm oder mehr betragen.

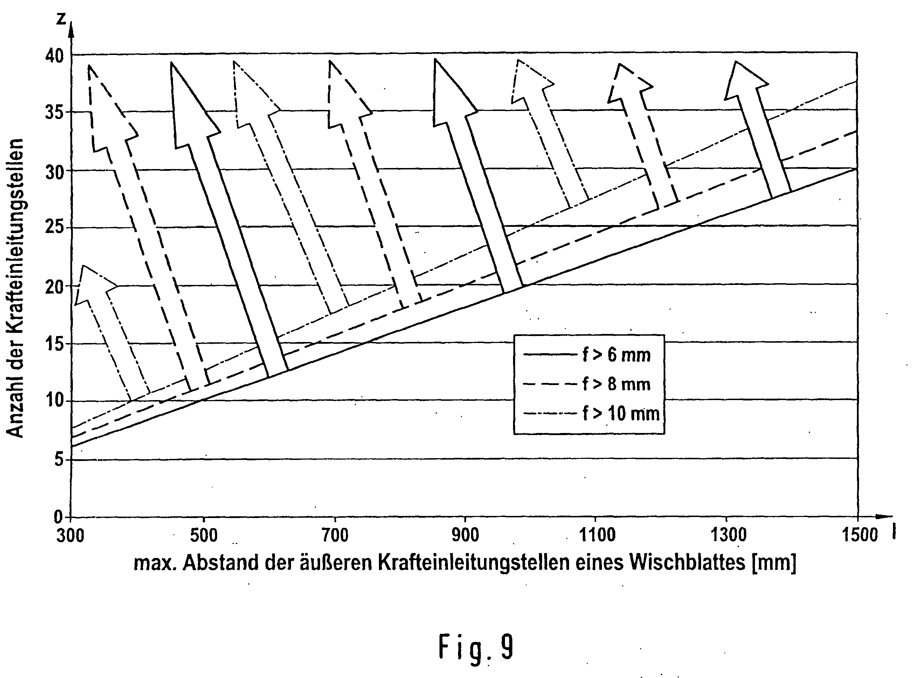

Aus der Fig. 9 kann aus der Durchbiegung f und der Länge des Wischblatts bzw. dem maximalen Abstand der äußeren Krafteinleitungsstellen des Wischblatts die optimale Anzahl von vorzusehenden Krafteinleitungsstellen bestimmt werden.

Bei einer Durchbiegung f zwischen 6 mm und 8 mm bestimmt sich die Anzahl z der Krafteinleitungsstellen bei einem maximalen Abstand 1, in mm, der beiden äußersten Krafteinleitungsstellen des Wischblatts 40, 80 nach der Gleichung z ≥ 0,02/mm * 1. Beträgt also der maximale Abstand 1 = 500 mm und die Durchbiegung f zwischen 6 mm und 8 mm, so sind mindestens 10 Krafteinleitungsstellen vorzusehen. Bei einem Wischblatt 40, 80, bei dem der Abstand 1 = 1000 mm beträgt, sind bei einer gleichen Durchbiegung mindestens 20 Krafteinleitungsstellen vorzusehen.

Beträgt die Durchbiegung f zwischen 8 mm und 10 mm, so berechnet sich die Anzahl z der Krafteinleitungsstellen 68 nach folgender Formel: z ≥ 0,0225/mm * 1. Bei einem Wert von 1 = 1000 mm ergibt sich demnach eine Anzahl von wenigstens z = 22,5 Krafteinleitungsstellen 68. Da jedoch nur ganze Krafteinleitungsstellen 68 vorgesehen werden können, wird die ermittelte Anzahl auf einen für die Praxis brauchbaren ganzen Wert auf- oder abgerundet.

Beträgt die Durchbiegung mehr als 10 mm, so bestimmt sich die Anzahl der Krafteinleitungsstellen 68 gemäß folgender Formel: z ≥ 0,025/mm *1. Bei einem Abstand von 1 = 1000 mm ergibt sich folglich eine Anzahl z von Krafteinleitungsstellen von wenigstens z = 25.

## Patentansprüche

1. Wischblatt (40, 80) zum Wischen von Scheiben an Fahrzeugen, mit einem waagebalkenartig aufgebauten Traggestell (41), das einen mit einem Wischarm verbindbaren Hauptbügel (42) und mit dem Hauptbügel(42), über wenigstens eine Ebene von Zwischenbügeln (44, 46), gekoppelte Endbügel (48) aufweist, und mit einem mit den Endbügeln (48), insbesondere über an den freien Enden der Endbügel (48) vorhandene Halteabschnitte (50), gekoppelten Wischleistensystem (52), wobei eine auf das Traggestell (41) wirkende Anpresskraft, die im Betriebszustand des Wischblatts (40, 80) das Wischleistensystems (52) gegen die Scheibe (10) presst, wobei jeder Bügel (42, 44, 46) die Anpresskraft über je eine an den beiden Endbereichen des Bügels (42, 44, 46) vorgesehene Übertragungsstelle (Gelenk) auf den ihm untergeordneten Bügel (44, 46, 48) verteilt und von den Endbügeln (48) über je eine an den beiden Endbereichen der Endbügel (48) vorgesehene Krafteinleitungsstelle (68) die Anpresskraft auf das Wischleistensystem (52) übertragen wird, **dadurch gekennzeichnet, dass** der Abstand (a, a') zwischen zwei benachbarten Krafteinleitungsstellen (68) kleiner als 40 mm ist und dass das Traggestell (41) zwischen dem Hauptbügel (41) und den Endbügeln (48) wenigstens zwei Ebenen von Zwischenbügeln (44, 46) aufweist.

2. Wischblatt (40, 80) nach Anspruch 1, **dadurch gekennzeichnet, dass** der Abstand (a, a') zwischen zwei benachbarten Krafteinleitungsstellen (68) kleiner als 35 mm und insbesondere kleiner als 30 mm ist.

3. Wischblatt (40, 80) nach Anspruch 1 oder 2, **dadurch gekennzeichnet, dass** der Abstand (a) zwischen zwei benachbarten Krafteinleitungsstellen (68) des gleichen Endbügels (48) kleiner als 40 mm oder kleiner als 35 mm oder kleiner als 30 mm ist.

4. Wischblatt (40, 80) nach einem der Ansprüche 1 bis 3, **dadurch gekennzeichnet, dass** der Abstand (a') zwischen zwei benachbarten Krafteinleitungsstellen (68) von zwei verschiedenen Endbügeln (48) kleiner als 40, 35 oder 30 mm ist.

5. Wischblatt (40, 80) nach einem der vorhergehenden Ansprüche, **dadurch gekennzeichnet, dass** der Abstand (a, a') aller benachbarten Krafteinleitungsstellen (68) kleiner als 40 mm oder kleiner als 35 mm oder kleiner als 30 mm ist.

6. Wischblatt (40, 80) nach einem der vorhergehenden Ansprüche, **dadurch gekennzeichnet, dass** die Krafteinleitungsstellen (68) jeweils im Bereich von den Halteabschnitten (50) liegen, wobei insbesondere im Bereich jedes Halteabschnitts (50) eine Krafteinleitungsstelle (68) liegt.

7. Wischblatt (40, 80) nach einem der vorhergehenden Ansprüche, **dadurch gekennzeichnet, dass** die Halteabschnitte als das Wischleistensystem (52) wenigstens abschnittsweise umgreifende Krallen (50) ausgebildet sind.

8. Wischblatt nach Anspruch 1, **dadurch gekennzeichnet, dass** ein freies Ende eines Zwischenbügels als Krafteinleitungsstelle bzw. als Halteabschnitt zur unmittelbaren Aufnahme des Wischleistensystems ausgebildet ist.

9. Wischblatt (40, 80) nach einem der vorhergehenden Ansprüche, **dadurch gekennzeichnet, dass** das Wischleistensystem (52) eine flexible Wischleiste bzw. einen Wischgummi (54) oder eine flexible Wischleiste bzw. einen Wischgummi (54) mit Mitteln (56) zum Verteilen der Anpresskraft über die Länge der Wischleiste bzw. des Wischgummis (54) umfasst.

10. Wischblatt (40, 80), nach einem der vorhergehenden Ansprüche, **dadurch gekennzeichnet, dass** bei einem einseitig eingespannten Teilbereich des Wischleistensystems (52), der in einem Abstand (b) von 65 mm zu der Einspannstelle (72) mit einer Kraft (F) von 0,5 N beaufschlagt wird, eine Durchbiegung (f) des Wischleistensystem (52) in einem Abstand (c) von 70 mm zu der Einspannstelle (72) 6 mm oder mehr beträgt.

11. Wischblatt (40, 80) nach Anspruch 10, **dadurch gekennzeichnet, dass** der Teilbereich aus dem freien Endbereich des Wischleistensystems (52) stammt.

12. Wischblatt (40, 80) nach Anspruch 10 oder 11, **dadurch gekennzeichnet, dass** die Durchbiegung (f) zwischen 6 mm und 8 mm beträgt und dass bei einem maximalen Abstand 1 (in mm) der beiden äußersten Krafteinleitungsstellen des Wischblatts (40, 80) wenigstens eine Anzahl z = 0,02/mm * 1 von Krafteinleitungsstellen (68) vorgesehen ist.

13. Wischblatt (40, 80) nach Anspruch 10 oder 11, **dadurch gekennzeichnet, dass** die Durchbiegung (f) zwischen 8 mm und 10 mm beträgt und dass bei einem maximalen Abstand 1 (in mm) der beiden äußersten Krafteinleitungsstellen (68) des Wischblatts (40, 80) wenigstens eine Anzahl z = 0,0225/mm * 1 von Krafteinleitungsstellen (68) vorgesehen ist.

14. Wischblatt (40, 80) nach Anspruch 10 oder 11, **dadurch gekennzeichnet, dass** die Durchbiegung (f) mehr als 10 mm beträgt und dass bei einem maximalen Abstand 1 (in mm) der beiden äußersten Krafteinleitungsstellen (68) des Wischblatts (40, 80) wenigstens eine Anzahl z = 0,025/mm * 1 von Krafteinleitungsstellen (68) vorgesehen ist.

15. Wischblatt (40, 80) nach einem der Ansprüche 9 bis 14, **dadurch gekennzeichnet, dass** die Mittel zum Verteilen der Anpresskraft über die Länge des Wischgummis (54) in Form von wenigstens einer Federschiene (56) aus Stahl ausgebildet sind.

16. Wischblatt (40, 80) nach Anspruch 15, **dadurch gekennzeichnet, dass** die Dicke (d) der Federschiene (56), bzw. bei mehreren, nicht in einer Ebene liegenden Federschienen die Summe der Dicken (d) der einzelnen Federschienen (56), kleiner als 0,5 mm ist.

17. Wischblatt (40, 80) nach Anspruch 15, **dadurch gekennzeichnet, dass** die Breite der Federschiene (56), bzw. bei mehreren, in einer Ebene liegenden Federschienen die Summe der Breiten der einzelnen Federschienen, kleiner oder gleich 5 mm ist.

18. Wischblatt (40, 80) nach einem der vorhergehenden Ansprüche, **dadurch gekennzeichnet, dass** das Wischleistensystem (52) in Wischblattlängsrichtung einen gleichförmigen oder weitgehend gleichförmigen Querschnitt aufweist.

19. Wischblatt (40, 80), nach einem der vorhergehenden Ansprüche, **dadurch gekennzeichnet, dass** das Produkt des Abstandes (a bzw. a', in mm) von zwei benachbarten Krafteinleitungsstellen (68) und der Dicke (d, in mm) der Federschiene (56) bzw. Summe der Dicken der Federschienen (56) kleiner oder gleich 30 mm² ist.

## Claims

1. Wiper blade (40, 80) for wiping windscreens on vehicles, comprising a support frame (41) formed in the manner of a balance arm, said support frame having a main clip (42) which can be connected to a wiper arm and an end clip (48) which is coupled to the main clip (42) via at least one plane of intermediate clips (44, 46), and comprising a wiper strip system (52) which is coupled to the end clips (48), in particular via holding sections (50) at the free ends of the end clips (48), wherein a pressing force acting on the support frame (41), which in the operating state of the wiper blade (40, 80) presses the wiper strip system (52) against the windscreen (10), wherein each clip (42, 44, 46), via a respective transfer point (articulation) provided at the two end regions of the clip (42, 44, 46), distributes the pressing force on the clip (44, 46, 48) arranged below it, and the pressing force is transferred to the wiper strip system (52) from the end clips (48) via a respective force introduction point (68) provided at the two end regions of the end clip (48), **characterized in that** the distance (a, a') between two neighbouring force introduction points (68) is less than 40 mm, and **in that** the support frame (41) has at least two planes of intermediate clips (44, 46) between the main clip (41) and the end clips (48).

2. Wiper blade (40, 80) according to Claim 1, **characterized in that** the distance (a, a') between two neighbouring force introduction points (68) is less than 35 mm and in particular less than 30 mm.

3. Wiper blade (40, 80) according to Claim 1 or 2, **characterized in that** the distance (a) between two neighbouring force introduction points (68) of the same end clip (48) is less than 40 mm or less than 35 mm or less than 30 mm.

4. Wiper blade (40, 80) according to any of Claims 1 to 3, **characterized in that** the distance (a') between two neighbouring force introduction points (68) of two different end clips (48) is less than 40, 35 or 30 mm.

5. Wiper blade (40, 80) according to any of the preceding claims, **characterized in that** the distance (a, a') between all the neighbouring force introduction points (68) is less than 40 mm or less than 35 mm or less than 30 mm.

6. Wiper blade (40, 80) according to any of the preceding claims, **characterized in that** the force introduction points (68) in each case lie in the region of the holding sections (50), wherein in particular a force introduction point (68) lies in the region of each holding section (50).

7. Wiper blade (40, 80) according to any of the preceding claims, **characterized in that** the holding sections are designed as claws (50) which encompass the wiper strip system (52) at least in some sections.

8. Wiper blade according to Claim 1, **characterized in that** a free end of an intermediate clip is designed as a force introduction point or as a holding section for directly holding the wiper strip system.

9. Wiper blade (40, 80) according to any of the preceding claims, **characterized in that** the wiper strip system (52) comprises a flexible wiper strip or wiper rubber (54) or a flexible wiper strip or wiper rubber (54) with means (56) for distributing the pressing force over the length of the wiper strip or wiper rubber (54).

10. Wiper blade (40, 80) according to any of the preceding claims, **characterized in that**, in a partial region of the wiper strip system (52) which is clamped at one side, and which is acted upon by a force (F) of 0.5 N at a distance (b) of 65 mm from the clamping point (72), a bend (f) in the wiper strip system (52) at a distance (c) of 70 mm from the clamping point (72) is 6 mm or more.

11. Wiper blade (40, 80) according to Claim 10, **characterized in that** the partial region starts from the free end region of the wiper strip system (52).

12. Wiper blade (40, 80) according to Claim 10 or 11, **characterized in that** the bend (f) is between 6 mm and 8 mm, and **in that**, for a maximum distance 1 (in mm) between the two outermost force introduction points of the wiper blade (40, 80), at least a number z = 0.02/mm * 1 of force introduction points (68) is provided.

13. Wiper blade (40, 80) according to Claim 10 or 11, **characterized in that** the bend (f) is between 8 mm and 10 mm, and **in that**, for a maximum distance 1 (in mm) between the two outermost force introduction points (68) of the wiper blade (40, 80), at least a number z = 0.0225/mm * 1 of force introduction points (68) is provided.

14. Wiper blade (40, 80) according to Claim 10 or 11, **characterized in that** the bend (f) is more than 10 mm, and **in that**, for a maximum distance 1 (in mm) between the two outermost force introduction points (68) of the wiper blade (40, 80), at least a number z = 0.025/mm * 1 of force introduction points (68) is provided.

15. Wiper blade (40, 80) according to any of Claims 9 to 14, **characterized in that** the means for distributing the pressing force over the length of the wiper rubber (54) are designed in the form of at least one spring rail (56) made of steel.

16. Wiper blade (40, 80) according to Claim 15, **characterized in that** the thickness (d) of the spring rail (56), or the sum of the thicknesses (d) of the individual spring rails (56) in the case of a number of spring rails which do not lie in one plane, is less than 0.5 mm.

17. Wiper blade (40, 80) according to Claim 15, **characterized in that** the width of the spring rail (56), or the sum of the widths of the individual spring rails in the case of a number of spring rails which lie in one plane, is less than or equal to 5 mm.

18. Wiper blade (40, 80) according to any of the preceding claims, **characterized in that** the wiper strip system (52) has a constant or substantially constant cross section in the longitudinal direction of the wiper blade.

19. Wiper blade (40, 80) according to any of the preceding claims, **characterized in that** the product of the distance (a or a', in mm) between two neighbouring force introduction points (68) and the thickness (d, in , mm) of the spring rails (56) or the sum of the thicknesses of the spring rails (56) is less than or equal to 30 mm².

## Revendications

1. Balai d'essuie-glace (40, 80) pour le balayage de vitres de véhicules, comportant une structure de support (41) conçue sous la forme d'un palonnier qui présente un étrier principal (42) pouvant être relié à un bras d'essuie-glace et des étriers d'extrémité (48) couplés à l'étrier principal (42) par l'intermédiaire d'au moins un niveau d'étriers intermédiaires (44, 46), et comportant un système de lame d'essuie-glace (52) couplé aux étriers d'extrémité (48), en particulier par l'intermédiaire d'un segment de fixation (50) présent sur les extrémités libres des étriers d'extrémité (48), une force de pression exercée sur la structure de support (41) appuyant le système de lame d'essuie-glace (52) contre la vitre (10) lorsque le balai d'essuie-glace (40, 80) fonctionne, chaque étrier (42, 44, 46) répartissant la force de pression sur l'étrier qui lui est adjoint (44, 46, 48) par l'intermédiaire d'un point de transmission (articulation) prévu aux deux zones d'extrémité de l'étrier (42, 44, 46) et la force de pression étant transmise par les étriers d'extrémité (48) au système de lame d'essuie-glace (52) par l'intermédiaire de points d'introduction de la force (68) prévus chacun au niveau des deux zones d'extrémité de l'étrier d'extrémité (48), **caractérisé en ce que** la distance (a, a') entre deux points d'introduction de la force (68) adjacents est inférieure à 40 mm, et **en ce que** la structure de support (41) présente au moins deux niveaux d'étriers intermédiaires (44, 46) entre l'étrier principal (42) et les étriers d'extrémité (48).

2. Balai d'essuie-glace (40, 80) selon la revendication 1, **caractérisé en ce que** la distance (a, a') entre deux points d'introduction de la force (68) adjacents est inférieure à 35 mm et en particulier inférieure à 30 mm.

3. Balai d'essuie-glace (40, 80) selon la revendication 1 ou 2, **caractérisé en ce que** la distance (a) entre deux points d'introduction de la force (68) adjacents du même étrier d'extrémité (48) est inférieure à 40 mm, ou inférieure à 35 mm, ou inférieure à 30 mm.

4. Balai d'essuie-glace (40, 80) selon une des revendications 1 à 3, **caractérisé en ce que** la distance (a') entre deux points d'introduction de la force (68) adjacents de deux étriers d'extrémité (48) différents est inférieure à 40, 35 ou 30 mm.

5. Balai d'essuie-glace (40, 80) selon une des revendications précédentes, **caractérisé en ce que** la distance (a, a') entre tous les points d'introduction de la force (68) est inférieure à 40 mm, ou inférieure à 35 mm, ou inférieure à 30 mm.

6. Balai d'essuie-glace (40, 80) selon une des revendications précédentes, **caractérisé en ce que** les points d'introduction de la force (68) se trouvent chacun dans la zone des segments de fixation (50), un point d'introduction de la force (68) se trouvant en particulier dans chaque segment de fixation (50).

7. Balai d'essuie-glace (40, 80) selon une des revendications précédentes, **caractérisé en ce que** les segments de fixation sont conçus sous la forme de griffes (50) enserrant le système de lame d'essuie-glace (52) au moins segment par segment.

8. Balai d'essuie-glace (40, 80) selon la revendication 1, **caractérisé en ce qu'**une extrémité libre d'un étrier intermédiaire est conçue en tant que point d'introduction de la force et/ou en tant que segment de fixation pour loger directement le système de lame d'essuie-glace.

9. Balai d'essuie-glace (40, 80) selon une des revendications précédentes, **caractérisé en ce que** le système de lame d'essuie-glace (52) comprend une lame d'essuie-glace flexible et/ou un caoutchouc d'essuie-glace (54), ou une lame d'essuie-glace flexible et/ou un caoutchouc d'essuie-glace (54) comportant des moyens (54) de répartition de la force de pression sur la longueur de la lame d'essuie-glace et/ou du caoutchouc d'essuie-glace (54).

10. Balai d'essuie-glace (40, 80) selon une des revendications précédentes, **caractérisé en ce que**, dans une zone partielle du système de lame d'essuie-glace (52) encastrée à une extrémité, qui est soumise à une distance (b) de 65 mm du point d'encastrement (72) à une force (F) de 0,5 N, une déflection (f) du système de lame d'essuie-glace (52) à une distance (c) de 70 mm du point d'encastrement (72) est de 6 mm ou plus.

11. Balai d'essuie-glace (40, 80) selon la revendication 10, **caractérisé en ce que** la zone partielle commence à partir de la zone d'extrémité libre du système de lame d'essuie-glace (52).

12. Balai d'essuie-glace (40, 80) selon la revendication 10 ou 11, **caractérisé en ce que** la déflection (f) est comprise entre 6 mm et 8 mm, et **en ce que** pour une distance maximale 1 (en mm) entre les deux points d'introduction de la force du balai d'essuie-glace (40, 80) les plus à l'extérieur, on prévoit au moins un nombre z = 0,02/mm * 1 de points d'introduction de la force (68).

13. Balai d'essuie-glace selon la revendication 10 ou 11, **caractérisé en ce que** la déflection (f) est comprise entre 8 mm et 10 mm, et **en ce que** pour une distance maximale 1 (en mm) entre les deux points d'introduction de la force du balai d'essuie-glace (40, 80) les plus à l'extérieur, on prévoit au moins un nombre z = 0,0225/mm * 1 de points d'introduction de la force (68).

14. Balai d'essuie-glace (40, 80) selon la revendication 10 ou 11, **caractérisé en ce que** la déflection (f) est supérieure à 10 mm, et **en ce que** pour une distance maximale 1 (en mm) entre les deux points d'introduction de la force du balai d'essuie-glace (40, 80) les plus à l'extérieur, on prévoit au moins un nombre z = 0,025/mm * 1 de points d'introduction de la force (68).

15. Balai d'essuie-glace (40, 80) selon une des revendications 9 à 14, **caractérisé en ce que** les moyens de répartition de la force de pression sur la longueur du caoutchouc d'essuie-glace (54) sont conçus sous la forme d'au moins un rail flexible (56) en acier.

16. Balai d'essuie-glace (40, 80) selon la revendication 15, **caractérisé en ce que** l'épaisseur (d) du rail flexible (56) et/ou, s'il y a plusieurs rails flexibles ne se trouvant pas dans le même plan, la somme des épaisseurs (d) des rails flexibles individuels (56), est inférieure à 0,5 mm.

17. Balai d'essuie-glace (40, 80) selon la revendication 15, **caractérisé en ce que** la largeur du rail flexible (56) et/ou, s'il y a plusieurs rails flexibles ne se trouvant pas dans le même plan, la somme des largeurs des rails flexibles individuels, est inférieure ou égale à 5 mm.

18. Balai d'essuie-glace (40, 80) selon une des revendications précédentes, **caractérisé en ce que** le système de lame d'essuie-glace (52) présente dans le sens de la longueur du balai d'essuie-glace une section transversale uniforme ou largement uniforme.

19. Balai d'essuie-glace (40, 80) selon une des revendications précédentes, **caractérisé en ce que** le produit de la distance (a et/ou a', en mm) entre deux points d'introduction de la force (68) adjacents par l'épaisseur (d en mm) du rail flexible (56) et/ou la somme des épaisseurs des rails flexibles (56) est inférieur ou égal à 30 mm².
